# EUROPÄISCHE PATENTSCHRIFT

(11) **EP 2 805 846 B1**
(45) Veröffentlichungstag und Bekanntmachung des Hinweises auf die Patenterteilung: **18.04.2018**
(21) Anmeldenummer: 13168773.3
(22) Anmeldetag: 22.05.2013
(51) Int. Cl.: B60M 1/04, B60M 1/12, B60M 1/16, E04H 12/00

(54) **OBERLEITUNGSMAST SOWIE OBERLEITUNGSANLAGE FÜR ELEKTRISCH ANGETRIEBENE FAHRZEUGE**
OVERHEAD MAST AND OVERHEAD SYSTEM FOR ELECTRICALLY DRIVEN VEHICLES
MÂT DE CATÉNAIRE ET INSTALLATION DE CATÉNAIRE POUR VÉHICULES ÉLECTRIQUES

(43) Veröffentlichungstag der Anmeldung: 26.11.2014
(73) Patentinhaber: SPL Powerlines Germany GmbH, 91301 Forchheim (DE)
(72) Erfinder: Eggersglüß, Thomas, 29664 Walsrode (DE)
(74) Vertreter: Kotitschke, Ralf Thomas

(56) Entgegenhaltungen:
- EP-A1- 0 434 770
- CA-A1- 1 221 144
- DE-A1-102007 024 155
- DE-C- 864 819
- DE-U1-202006 015 706

## Beschreibung

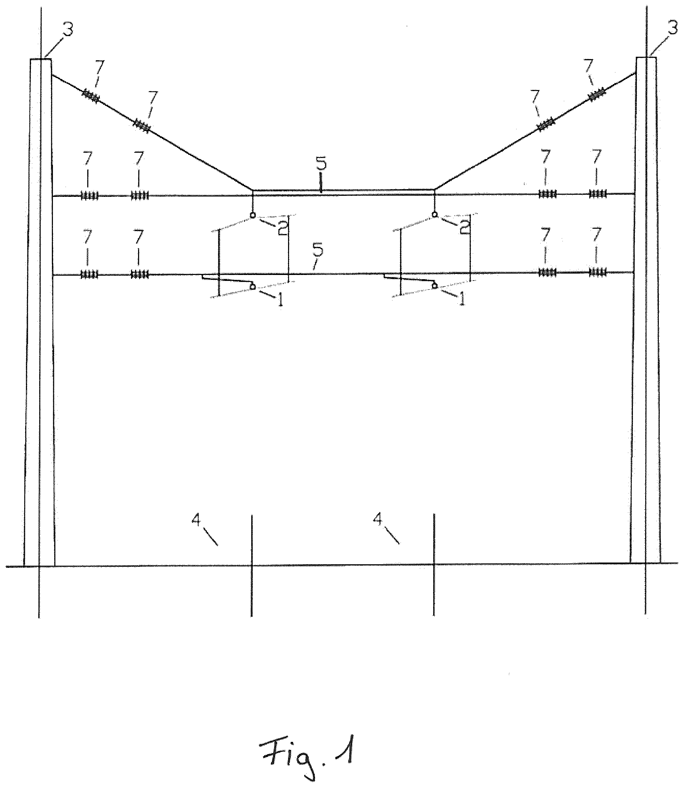

Die Erfindung betrifft einen Oberleitungsmast sowie eine Oberleitungsanlage für elektrisch angetriebene Fahrzeuge, beispielsweise mit Schleifbügel versehene Schienenfahrzeuge oder Omnibusse.
Im Personen- und Güterverkehr werden elektrisch angetriebene Schienenfahrzeuge eingesetzt, die mit einem Schleifibügel ausgestattet sind, der sich in elektrischem Kontakt mit einer sich in Fahrtrichtung erstreckenden Oberleitung (auch als Fahrdraht bezeichnet) befindet und entlang dieser schleift, um das Schienenfahrzeug mit der zur Fortbewegung notwendigen elektrischen Energie zu versorgen. Die Oberleitung sowie die gesamte Tragkonstruktion für die Oberleitung werden von in regelmäßigen Abständen in Fahrtrichtung vorgesehenen Masten getragen. EP0434770 offenbart einen Oberleitungsmast nach dem Oberbegriff des Anspruchs 1. In Fig. 1 ist ein Beispiel einer herkömmlichen Oberleitungsanlage für ein zweigleisiges Schienennetz dargestellt. Spannungsführende Oberleitungen oder Fahrdrähte 1 erstrecken sich in Fahrtrichtung und oberhalb der mit den Bezugszeichen 4 lediglich schematisch angedeuteten elektrisch angetriebenen Fahrzeuge. Diese Fahrdrähte 1 werden von ebenfalls spannungsführenden Tragseilen 2 getragen. Zur Aufnahme der während der Fahrt und/oder durch Umwelteinflüsse, wie zum Beispiel durch Windstöße, auftretenden Kräfte werden die Tragseile 2 sowie die Fahrdrähte 1 von horizontal und diagonal verlaufenden flexiblen Verspannungen 5, z.B. Stahlseile, gehalten, die wiederum an den Masten 3 verankert sind. Spezielle Spannvorrichtungen zum Einstellen und Nachjustieren der Durchhängung der Fahrdrähte 1 und Tragseile 2 in Längsrichtung der Schienen sind in der Fig. 1 nicht dargestellt. Die Verspannungen 5 dienen in dem in Fig. 1 gezeigten Beispiel als Quertrageinrichtung, weil sie die Position der Fahrdrähte 1 und der Tragseile 2 in Querrichtung zur Schiene sicherstellen.

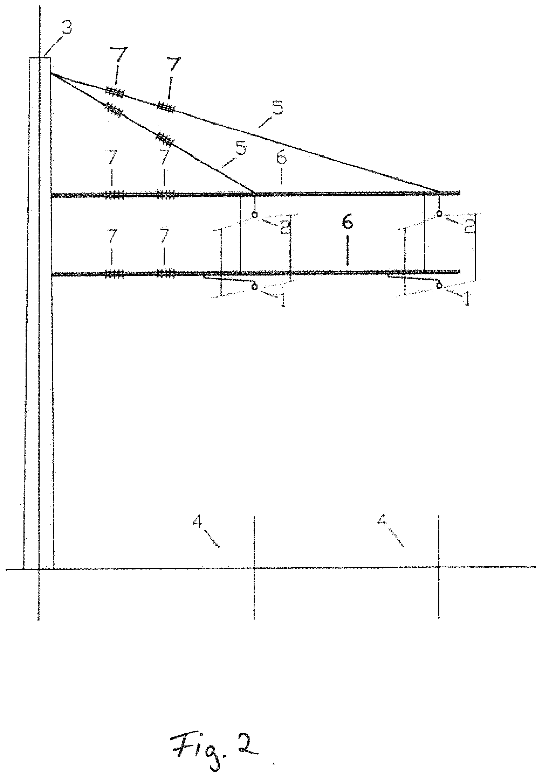

Die Quertrageinrichtung einer Oberleitungsanlage kann auch wie in Fig. 2 gezeigt aufgebaut sein. In Fig. 2 sind zwei starre Ausleger 6 übereinander angeordnet, die wiederum über Spannseile 5 stabilisiert werden, um sowohl horizontale als auch vertikal gerichtete Kräfte aufnehmen zu können. Sowohl die Ausleger 6 als auch die Spannseile 5 sind mit dem Mast 3 fest verbunden. An den beiden in vertikaler Richtung übereinander angeordneten Auslegern 6 sind einerseits die Tragseile 2 und andererseits die Fahrdrähte 1 befestigt.

In Fig. 3 ist eine weitere herkömmliche Quertrageinrichtung dargestellt, die lediglich aus starren Auslegern 6 aufgebaut ist. Die Geometrie der Ausleger ist z-förmig und kann dadurch sowohl horizontale als auch vertikale Kräfte aufnehmen.

In Fig. 4 ist eine weitere herkömmliche Quertrageinrichtung gezeigt, die einen meist als Joch 8 bezeichneten Querträger umfasst, an dem die Tragseile 2 befestigt sind. Zusätzlich ist ein Spannseil 5, an dem die Fahrdrähte 1 befestigt sind, zwischen den Masten 3 vorgesehen.

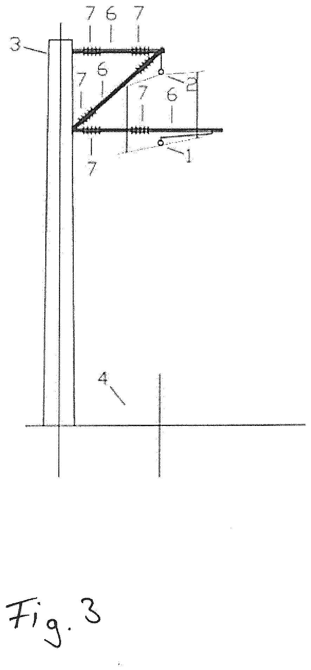

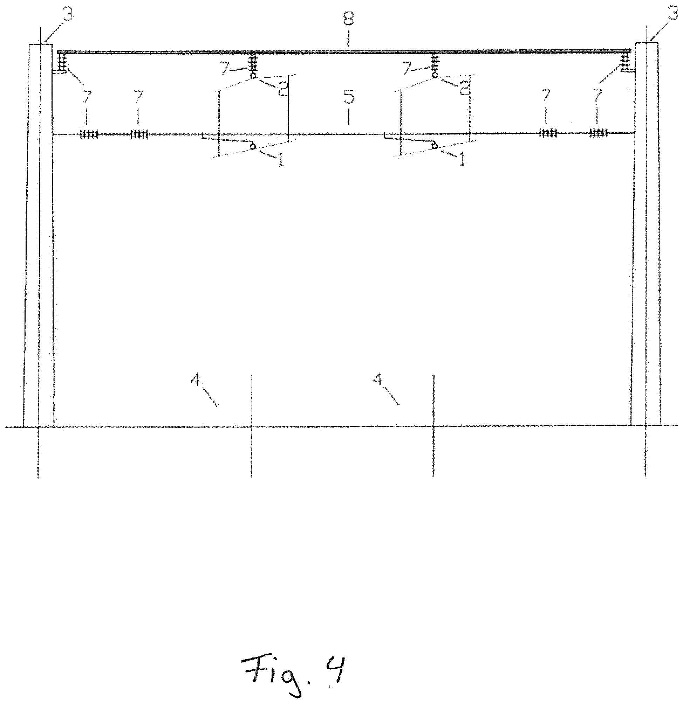

Um die spannungsführenden Tragseile 2 und Fahrdrähte 1, die als elektrisch aktive Bauteile der Oberleitungsanlage bezeichnet werden, elektrisch vom Mast 3 zu isolieren, weisen die Quertrageinrichtungen, d.h. in den in den Fig. 1 bis Fig. 4 gezeigten Beispielen die Spannseile 5, die Ausleger 6 sowie das Joch 8 Isolatoren 7 auf. Die Isolatoren 7, die heutzutage je nach Anforderung meist in Form von Rohrkappen- und Stabisolatoren vorliegen, sollen den Stromfluss entlang der Quertrageinrichtung unterbrechen und einen Stromüberschlag auf den Mast 3 verhindern.

Die Masten 3, die in regelmäßigen Abständen einseitig entlang der Schienen, oder auch beiderseitig der Schienen für einen zweigleisigen Schienenverkehr angeordnet sind, tragen somit das gesamte Gewicht der Quertrageinrichtungen 5, 6, 8 und der Fahrdrähte 1 und Tragseile 2. Je nach Abstand der Masten zueinander und Abstand der Fahrdrähte 1 und Tragseile 2 in Querrichtung zu den Masten 3 müssen die Masten 3 unterschiedlichen Beanspruchungen standhalten, denn selbst bei starkem Wind oder bei hohen Fahrtgeschwindigkeiten der Schienenfahrzeuge, bei denen das Schienenfahrzeug bugseitig eine nicht unerhebliche Druckwelle vor sich her schiebt, müssen die Masten 3 die exakte Position des Fahrdrahtes 1 gewährleisten.

Gewöhnlich werden Maste deshalb aus stahlbewehrtem Beton oder Metall hergestellt. Je nach erforderlicher Stabilität und Maßhaltigkeit wird das entsprechende Material ausgewählt. Ein Zinküberzug auf einem Stahlmast erhöht zudem dessen Korrosionsanfälligkeit. Stahlbewehrter Beton sowie Metall ist elektrisch leitfähig. Deshalb bedarf es in der gesamten Oberleitungsanlage einer großen Anzahl von Isolatoren, um den Mast vollständig von den aktiven, d.h. stromführenden Bauteilen elektrisch zu isolieren.

Eine Aufgabe der vorliegenden Erfindung ist es deshalb, einen Oberleitungsmast für elektrisch angetriebene Fahrzeuge, insbesondere Schienenfahrzeuge oder Omnibusse vorzusehen, dessen Montage im Rahmen des Aufbaus einer Oberleitungsanlage deutlich vereinfacht und kostengünstiger ist, und der die Sicherheit von im Bereich des Masten arbeitenden oder sich aufhaltenden Personen verbessert. Eine weitere Aufgabe der Erfindung besteht in der Schaffung einer Oberleitungsanlage, die einfacher installiert werden kann und bei der der Isolationsschutz sowie der Schutz vor elektrischen Überschlägen verbessert ist.
Diese beiden Aufgaben werden erfindungsgemäß durch die Merkmalskombinationen der Patentansprüche 1 und 8 gelöst. Bevorzugte bzw. optionale Weiterbildungen der Erfindung sind Gegenstand der abhängigen Patentansprüche 2-7 und 9-11.

Nach einer bevorzugten Ausführungsform der Erfindung ist im Inneren des Oberleitungsmasten zumindest abschnittsweise eine Innenbewehrung aus Stahl und/oder Beton vorgesehen.
Weiterhin bevorzugt ist die Innenbewehrung im Bereich eines Fußendes des Oberleitungsmasten vorgesehen.
Noch weiter bevorzugt ist der Oberleitungsmast einteilig aus dem elektrisch isolierenden Material gefertigt.
Nach einer Weiterbildung der Erfindung ist der Oberleitungsmast aus dem elektrisch isolierenden Material massiv gefertigt.

Der Oberleitungsmast gemäß einer weiteren Ausführungsform der Erfindung ist zu seinem Kopfende hin verjüngt ausgebildet.

Die erfindungsgemäße Oberleitungsanlage für elektrisch angetriebene Fahrzeuge weist zumindest einen elektrisch leitfähigen, zur Stromführung dienenden Fahrdraht (1), der mit einem elektrisch angetriebenen Fahrzeug in elektrischen Kontakt bringbar ist, zumindest eine elektrisch leitfähige Quertrageinrichtung, mit weicher der Fahrdraht gekoppelt ist, und zumindest einen Oberleitungsmast, an dem die Quertrageinrichtung befestigt ist, auf. Die Außenoberfläche des Oberleitungsmasten ist im Wesentlichen über ihre gesamte Länge vollständig aus einem elektrisch isolierenden Material gefertigt. Vorzugsweise kann der Oberleitungsmast auch wie voranstehend ausgeführt sein.

Gemäß einer vorteilhaften Ausführungsform der Erfindung weist die Quertrageinrichtung keinen elektrischen Isolator zur elektrischen Isolierung der Quertrageinrichtung von dem Oberleitungsmast auf.

Vorzugsweise weist die Oberleitungsanlage des Weiteren ein Fundament auf, mit dem der Oberleitungsmast derart verbunden ist, dass im verbundenen Zustand die von außen sichtbare Außenfläche des Oberleitungsmasten im Wesentlichen vollständig, vorzugsweise vollständig aus dem elektrisch isolierenden Material gefertigt ist.

Weiterhin bevorzugt weist die Oberleitungsanlage des Weiteren eine Beleuchtungsanlage, die mit Hilfe der Quertrageinrichtung an dem Oberleitungsmast befestigt ist, auf.

Im Folgenden wird die Erfindung rein beispielhaft anhand der Figuren beschrieben. Von den Figuren zeigen:
- Fig. 1-4:: herkömmliche Oberleitungsanlagen, die unterschiedlich konstruierte Quertrageinrichtungen aufweisen;

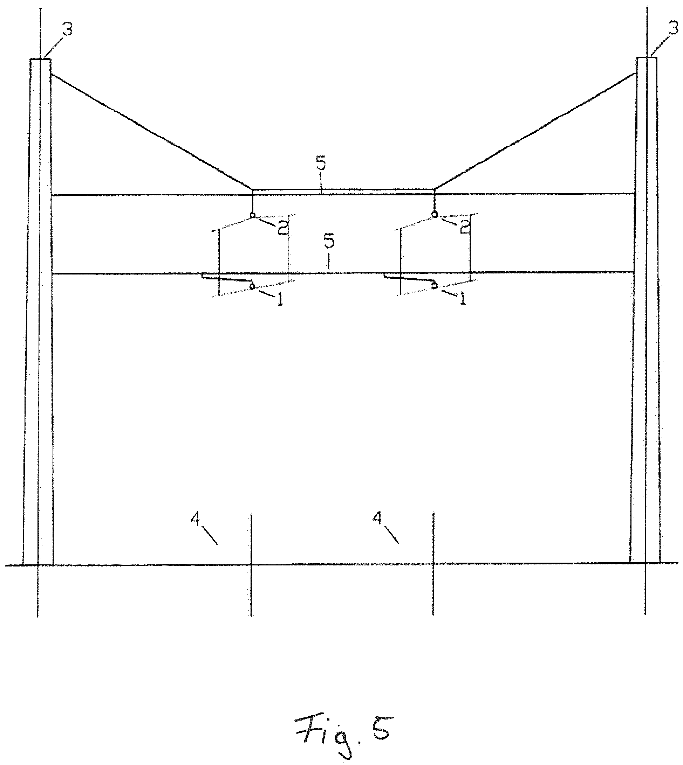

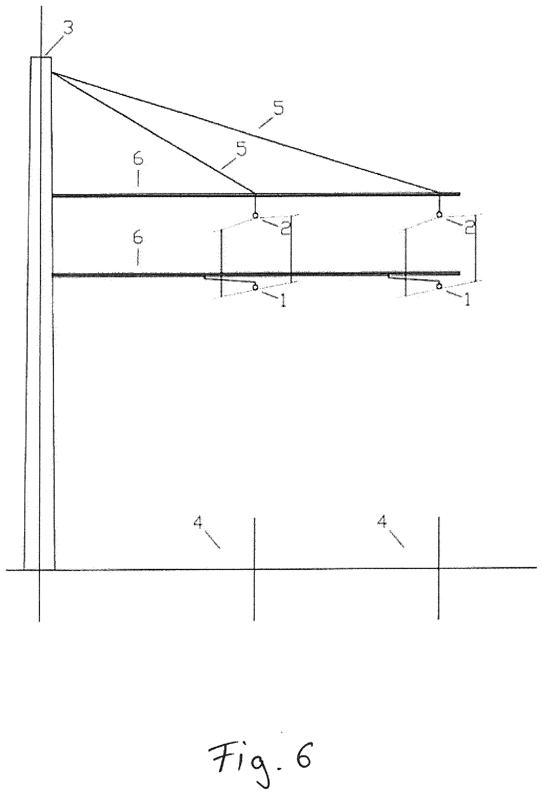

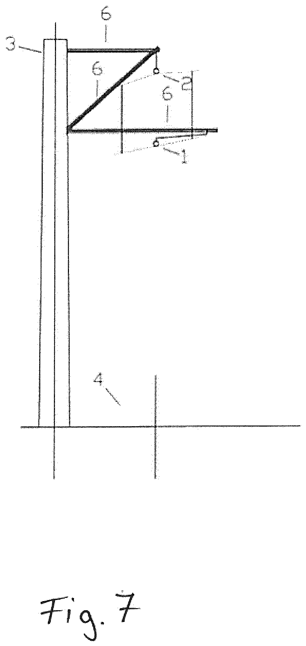

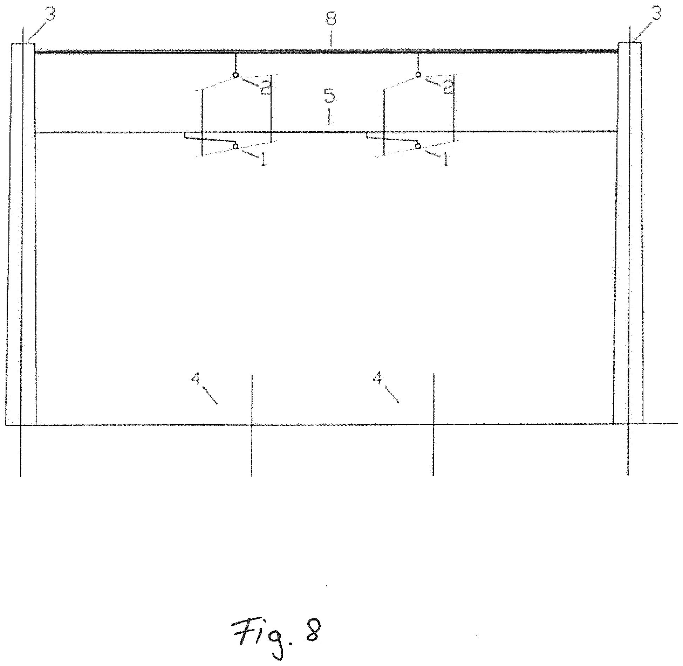

- Fig. 5-8:: Oberleitungsanlagen gemäß verschiedener Ausführungsformen der Erfindung; und

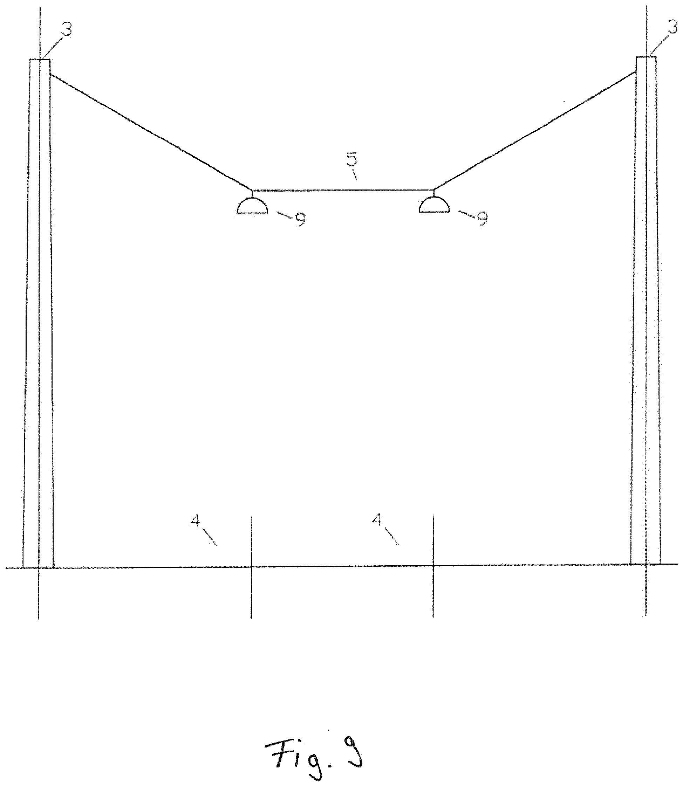

- Fig. 9:: einen Oberleitungsmast gemäß der Erfindung, an dem eine Beleuchtungsanlage befestigt ist.

Die in den Fig. 5 bis Fig. 8 dargestellten Oberleitungsanlagen weisen jeweils eine Quertrageinrichtung 5, 6, 8 auf, die in Ansehnung ihres konstruktiven Aufbaus im Wesentlichen den Quertrageinrichtungen der Fig. 1 bis Fig. 4 entsprechen. Deshalb wird an dieser Stelle explizit auf die Beschreibung der Fig. 1 bis Fig. 4 Bezug genommen.

Allerdings ist die Erfindung nicht auf den Aufbau der in den Fig. 5 bis Fig. 8 gezeigten Oberleitungsanlagen beschränkt. Vielmehr ist die Erfindung auf jegliche Art von Oberleitungsanlage, beispielsweise Kettenwerke, Quertragwerke, zweigleisige Ausleger und dergleichen anwendbar, bei der stromführende Bauteile über eine irgendwie geartete Quertrageinrichtung an einem Mast befestigt sind.

Vorzugsweise ist der Oberleitungsmast 3 zu seinem kopfseitigen Ende hin verjüngt ausgebildet. Dies vereinfacht die form- oder kraftschlüssige Befestigung der Quertrageinrichtung 5, 6, 8 an dem Mast 3.

Von Bedeutung für die Realisierung des der Erfindung zugrunde liegenden Gedankens ist, dass die Außenoberfläche eines oder bei Bedarf auch mehrerer Oberleitungsmasten 3 im Wesentlichen über ihre gesamte Höhe bzw. Länge aus einem elektrisch isolierenden Material gefertigt ist. Mit anderen Worten, für einen Betrachter ist bei einem installierten Oberleitungsmast 3 von außen lediglich das elektrisch isolierende Material sichtbar. An den beiden meist relativ kleinen außenseitigen Stirnflächen am kopf- und fußseitigen Ende des Oberleitungsmasten 3 muss nicht notwendigerweise und nicht ausschließlich elektrisch isolierendes Material sichtbar sein, da dies zur Realisierung der Erfindung nicht zwingend erforderlich ist.

Elektrisch isolierend in diesem Zusammenhang bedeutet, dass das Material, aus dem die Außenoberfläche des Masten 3 gefertigt ist, einen Stromüberschlag von den spannungsführenden Bauteilen 1, 2 der Oberleitungsanlage auf den Mast 3 verhindert. Somit kann der Mast 3 aufgrund seiner elektrischen Eigenschaften selbst als elektrischer Isolator verwendet werden. Dadurch können in den Quertrageinrichtungen 5, 6, 8 die elektrischen Isolatoren (Bezugszeichen 7 in den Fig. 1 bis Fig. 4) entfallen und die spannungsführenden Bauteile, das heißt die Tragseile 2 und die Fahrdrähte 1 können direkt am Mast 3 befestigt werden, ohne dass Isolatoren 7 dazwischen geschaltet werden müssen.

Der Mast 3 ist vorzugsweise über im Wesentlichen seine gesamte Länge einteilig, noch bevorzugter massiv aus einem elektrisch isolierenden Material hergestellt. Der Mast 3 kann aber auch vorzugsweise im Inneren einen Stahl- oder Betonkern als Innenbewehrung aufweisen. Die Innenbewehrung erstreckt sich vorzugsweise abschnittsweise, und noch bevorzugter lediglich im Bereich des fußseitigen Endes im Inneren des Masten 3. Alternativ kann die Bewehrung auch über die gesamte Länge im Inneren des Masten 3 verlaufen.

Inwieweit eine Bewehrung überhaupt sinnvoll ist und über weiche Länge sie im Inneren des Masten 3 verlaufen soll, hängt von vielerlei Faktoren ab. Zu diesen Faktoren gehören u.a. das maximal zu erwartende Biegemoment des Masten 3 unter Berücksichtigung eines entsprechend gewählten oder gesetzlich vorgegebenen Sicherheitsfaktors, die Höhe des Masten 3, die Fahrgeschwindigkeit der elektrisch angetriebenen Fahrzeuge 4, das Elastizitätsmodul des elektrisch isolierenden Materials, aus dem der Mast 3 - ohne Innenbewehrung - hergestellt ist.

Ein bevorzugtes elektrisch isolierendes Material ist ein thermoplastischer oder duroplastischer glasfaserverstärkter Kunststoff (GFK-Material). Als thermoplastisches GFK-Material sei hier nur beispielhaft Polyamid, und als duroplastisches GFK-Material lediglich Polyesterharz und Epoxidharz erwähnt.

Der Mast 3 wird vorzugsweise in einem Fundament, das nicht Gegenstand der Erfindung ist, verankert. Beispielsweise kann der Mast 3 auch in eine Fundamenthülse eingesetzt und mit dieser verschraubt werden. Hierbei ist es nicht unbedingt erforderlich, dass die Außenoberfläche desjenigen fußseitigen Endabschnittes des Masten 3, der in die Fundamenthülse eingebracht ist, vollständig aus elektrisch isolierendem Material gefertigt ist, da dieser fußseitige und möglicherweise aus Beton oder Stahl gefertigte Abschnitt die Fundamenthülse in vertikaler Richtung nicht überragt. An dieser Stelle wird explizit darauf hingewiesen, dass jegliche Art von Fundament im Sinne der Erfindung nicht als ein Teil des Masten 3 angesehen wird.

Dadurch, dass die Außenoberfläche des Masten 3 vorzugsweise über im Wesentlichen ihre gesamte Länge hinweg aus einem GFK-Material gefertigt ist, bringt den Vorteil, dass das Gesamtgewicht des Masten 3 gegenüber herkömmlichen Beton- oder Stahlmasten deutlich reduziert ist. Darüber hinaus ist die Isolation des Masten 3 von den spannungsführenden Teilen 1, 2 der Oberleitungsanlage deutlich vereinfacht. Mit anderen Worten, der Isolationsschutz der gesamten Oberleitungsanlage ist verbessert. Somit besteht auch ein hoher Schutz vor elektrischen Überschlägen. Des Weiteren ist die Personensicherheit im Bereich des Masten 3 verbessert, beispielsweise bei Instandhaltungsarbeiten.

Wie in Fig. 9 dargestellt, können an derartigen Masten 3 auch Beleuchtungsanlagen 9 befestigt werden. Mittels meist aus Metall bestehender Spannseile werden die Beleuchtungsanlagen 9 zwischen den in Fig. 9 gezeigten Masten 3 verspannt. Auch bei einem derartigen Aufbau kann auf Isolatoren 7, welche die metallischen Spannseile von den herkömmlich elektrisch leitfähigen Masten 3 isolieren, verzichtet werden. Dies spart Kosten und vereinfacht die gesamte Montage.

## Patentansprüche

1. Oberleitungsmast (3) für elektrisch angetriebene Fahrzeuge (4), **dadurch gekennzeichnet, dass** dessen Außenoberfläche im installierten Zustand über seine gesamte sichtbare Länge vollständig aus einem elektrisch isolierenden Material gefertigt ist, **dadurch gekennzeichnet, dass** das elektrisch isolierende Material ein glasfaserverstärkter oder kohlestofffaserverstärkter Kunststoff ist.

2. Oberleitungsmast (3) nach Anspruch 1, **dadurch gekennzeichnet, dass** im Inneren des Oberleitungsmasten (3) zumindest abschnittsweise eine Innenbewehrung aus Stahl und/oder Beton vorgesehen ist.

3. Oberleitungsmast (3) nach Anspruch 1 oder 2, **dadurch gekennzeichnet, dass** die Innenbewehrung im Bereich eines Fußendes des Oberleitungsmasten (3) vorgesehen ist.

4. Oberleitungsmast (3) nach Anspruch 1, **dadurch gekennzeichnet, dass** er einteilig aus dem elektrisch isolierenden Material gefertigt ist.

5. Oberleitungsmast (3) nach Anspruch 4, **dadurch gekennzeichnet, dass** er aus dem elektrisch isolierenden Material massiv gefertigt ist.

6. Oberleitungsmast (3) nach einem der vorhergehenden Ansprüche, **dadurch gekennzeichnet, dass** er zu seinem Kopfende hin verjüngt ausgebildet ist.

7. Oberleitungsanlage für elektrisch angetriebene Fahrzeuge (4), aufweisend zumindest einen elektrisch leitfähigen, zur Stromführung dienenden Fahrdraht (1), der mit einem elektrisch angetriebenen Fahrzeug (4) in elektrischen Kontakt bringbar ist, zumindest eine elektrisch leitfähige Quertrageinrichtung (5, 6, 8), mit welcher der Fahrdraht gekoppelt ist, und zumindest einen Oberleitungsmast nach einem der vorhergehenden Ansprüche 1 bis 6, an dem die Quertrageinrichtung (5, 6, 8) befestigt ist.

8. Oberleitungsanlage nach Anspruch 7, **dadurch gekennzeichnet, dass** die Quertrageinrichtung (5, 6, 8) keinen elektrischen Isolator (7) zur elektrischen Isolierung der Quertrageinrichtung (5, 6, 8) von dem Oberleitungsmast (3) aufweist.

9. Oberleitungsanlage nach Anspruch 7 oder 8, des Weiteren aufweisend ein Fundament, mit dem der Oberleitungsmast (3) derart verbunden ist, dass im verbundenen Zustand die von außen sichtbare Außenfläche des Oberleitungsmasten (3) im Wesentlichen vollständig, vorzugsweise vollständig aus dem elektrisch isolierenden Material gefertigt ist.

10. Oberleitungsanlage nach einem der Ansprüche 7 bis 9, des Weiteren aufweisend eine Beleuchtungsanlage (9), die mit Hilfe der Quertrageinrichtung (5, 6, 8) an dem Oberleitungsmast (3) befestigt ist.

## Claims

1. An overhead mast (3) for electrically driven vehicles (4), **characterised in that**, when installed, the outer surface thereof is manufactured completely from an electrically insulating material over its entire length, and **in that** the electrically insulating material is a glass-fibre-reinforced or carbon-fibre-reinforced plastic.

2. The overhead mast (3) according to claim 1, **characterised in that** an inner reinforcement from steel and/or concrete is provided at least in sections thereof inside the overhead mast (3).

3. The overhead mast (3) according to claim 1 or 2, **characterised in that** the inner reinforcement is provided in the area of a foot end of the overhead mast (3) .

4. The overhead mast (3) according to claim 1, **characterised in that** it is manufactured in one piece from the electrically insulating material.

5. The overhead mast (3) according to claim 4, **characterised in that** it is solidly manufactured from the electrically insulating material.

6. The overhead mast (3) according to one of the preceding claims, **characterised in that** it is tapered in direction of its top end.

7. An overhead system for electrically driven vehicles (4) comprising at least one electrically conductive contact wire (1) providing the power supply, which can be brought into electrical contact with the electrically driven vehicle (4), at least one electrically conductive cross-member (5, 6, 8), with which the contact wire is coupled and at least one overhead mast according to one of the preceding claims 1 to 6, to which the cross-member (5, 6, 8) is fastened.

8. The overhead mast (3) according to claim 7, **characterised in that** the cross-member (5, 6, 8) does not comprise an electrical isolator (7) for electrically insulating the cross-member (5, 6, 8) from the overhead mast (3).

9. The overhead system according to claim 7 or 8, further comprising a foundation to which the overhead mast (3) is connected in such a way that when connected, the outer surface of the overhead mast (3) which is visible from outside is in essence, preferably completely, manufactured from the electrically insulating material.

10. The overhead system according to one of claims 7 to 9, further comprising a lighting system (9) which is fastened to the overhead mast (3) with the aid of the cross-member (5, 6, 8).

## Revendications

1. Mât de caténaire (3) pour véhicules électriques(4), **caractérisé en ce que** sa surface extérieure, à l'état installé, est entièrement fabriquée, sur toute sa longueur, dans un matériau électriquement isolant et **en ce que** le matériau électriquement isolant est une matière plastique renforcée avec des fibres de verre ou de carbone.

2. Mât de caténaire (3) selon la revendication 1, **caractérisé en ce qu'**une armure intérieure en acier et/ou en béton est prévue à l'intérieur de celui-ci (3), du moins sur certains tronçons.

3. Mât de caténaire (3) selon la revendication 1 ou la revendication 2, **caractérisé en ce que** l'armure intérieure est prévue au niveau d'une extrémité inférieure du mât de caténaire (3).

4. Mât de caténaire (3) selon la revendication 1, **caractérisé en ce qu'**il est fabriqué d'un seul tenant dans le matériau électriquement isolant.

5. Mât de caténaire (3) selon la revendication 4, **caractérisé en ce qu'**il est fabriqué entièrement dans le matériau électriquement isolant.

6. Mât de caténaire (3) selon l'une quelconque des revendications précédentes, **caractérisé en ce qu'**il se rétrécit vers son extrémité supérieure.

7. Mât de caténaire pour véhicules électriques (4) présentant au moins un fil de contact (1) électriquement conducteur servant à conduire le courant, pouvant être mis en contact électrique avec un véhicule (4) électrique, au moins un dispositif transversal porteur (5, 6, 8) électriquement conducteur avec lequel le fil de contact est couplé et, au moins un mât de caténaire selon l'une quelconque des revendications 1 à 6 auquel le dispositif transversal porteur (5, 6, 8) peut être fixé.

8. Installation de caténaire selon la revendication 7, **caractérisée en ce que** le dispositif transversal porteur (5, 6, 8) ne présente pas d'isolateur électrique (7) pour l'isolation électrique du dispositif transversal porteur (5, 6, 8) du mât de caténaire (3).

9. Installation de caténaire selon la revendication 7 ou la revendication 8, présentant par ailleurs une fondation avec laquelle le mât de caténaire (3) est relié de telle sorte que, à l'état relié, la surface extérieure visible du mât de caténaire (3) est fabriquée essentiellement, de préférence entièrement dans le matériau électriquement isolant.

10. Installation de caténaire selon l'une quelconque des revendications 7 à 9, présentant par ailleurs un système d'éclairage (9) fixé sur le mât de caténaire (3) à l'aide du dispositif transversal porteur (5, 6, 8).
